# EUROPEAN PATENT SPECIFICATION

(11) **EP 4 422 390 B1**
(45) Date of publication and mention of the grant of the patent: **22.01.2025**
(21) Application number: 22717949.6
(22) Date of filing: 08.03.2022
(51) Int. Cl.: A01K 1/02, A01K 1/00, A01K 1/03, A01K 29/00, A01K 63/00

(54) **MOBILE MULTIFUNCTIONAL MODULE FOR ANIMAL HOUSING**
MOBILES MULTIFUNKTIONSMODUL FÜR DIE HAUSTIERHALTUNG
MODULE MULTIFONCTIONNEL MOBILE POUR LE LOGEMENT D'ANIMAUX DOMESTIQUES

(30) Priority: 27.12.2021 SK 501002021
(43) Date of publication of application: 04.09.2024
(73) Proprietor: GOLDEN LIONS S.R.O., 962 71 Dudince (SK)
(72) Inventor: TOTKOVI , Ján, 962 71 Dudince (SK)
(74) Representative: Cechvalova, Dagmar
(86) International application number: PCT/SK2022/050003
(87) International publication number: WO 2023/128879

(56) References cited:
- EP-A1- 3 635 969
- EP-B1- 3 635 969
- CN-U- 212 545 054
- US-A- 3 822 673
- US-A1- 2016 057 968

## Description

### Technical field

The present invention relates to the construction of a mobile multifunctional module (hereinafter also referred to as "mobile module") for housing animals, designed to enhance the protection, comfort and care of animals. The present invention falls within the field of pet supplies for companion terrestrial animals, reptiles, amphibians and fishes.

### Background

In the state of the art, various solutions for housing and transporting animals in general are known. For dry terrestrial domestic animals such as dogs, cats, etc., these are various pens, kennels, cages, etc., which provide the animal with a minimum or standard level of privacy and comfort. These pens and cages are usually made of metal mesh or plastic mesh. In the disclosed document CN 112535108 A, a cage for a dog is described which is capable of achieving automatic cooling and heat dissipation for the dog. The dog cage comprises a cage body which is provided with a fan fixedly attached to an inner wall of the cage body.

Another disclosure, CN 212325049 U, describes a pet house that includes a house body, a control system, light bulbs, a temperature controller, and a disinfection device integrated into an ultraviolet and ozone emitter, all of which are located on top of the inside of the house body. At the lower part of the house body is a movably installed collection box for biological material, and a transparent main door is located at the front of the house body. A monitoring camera is installed in the house.

In another disclosed document CN 111149712 A, a cat house with rapid air circulation is described which comprises a control box fixedly positioned at the upper end of the cat house body. A microcomputer and a display are mounted in the control box. A temperature sensor is fixed to the rear of the interior of the cat house body, a humidity sensor is fixed to a side wall of the cat house body on the right side of the temperature sensor, a camera is fixed to a corner of the cat house body and positioned on the left side of the temperature sensor. A fan is fixed in the ventilation frame.

Another disclosed document CN 212545054 U describes a pet box for permanent indoor placement that includes a side frame, a side plate, a heated top plate, a top frame, an installation box for built-in devices, a top divider plate, a middle divider plate, a lower plate, a lower frame, and a glass door. The built-in equipment installation box is rigidly connected to the animal box top or frame.

Another disclosed document US2016057968 A1 describes a versatile pet transporter which can be fitted with a litter box and readily replaceable litter packages, a fan, sound monitoring, and other features.

Various terrariums are used for housing and transporting lizards, reptiles. turtles, spiders, insects and similar animals, which provide the animal with minimum or standard privacy and comfort. These terrariums are usually made of glass. All additional components such as heaters, diffusers, fans, filters, lighting, etc. are located on the ceiling, walls and lower part of the terrarium body.

The simplest metal cages for animals in the state of the art have a cold effect on the animals without privacy, comfort for the animal and do not provide noise comfort for the animal at times of increased noise, especially in air transport. At the time of transport of the animals, in view of the adverse aspects mentioned above, it is necessary to apply sedatives also in the knowledge of the consequent side effects. Also, the existing design and equipment of the animal housing modules do not ensure the owner's contact with the animal during hospitalisation, convalescence or transport. All functions of the existing state-of-the-art animal housing modules are singlepurpose, as their structures and the components mounted in them cannot be used in any other way without the need for external modification of the module skeleton due to the fact that most of the module components are located in several places of the module skeleton.

As a result of efforts to address the shortcomings of animal housing modules in the art known in the prior art, the construction of a mobile animal housing module according to the invention described herein is further described as follows.

### Summary of the invention

Deficiencies in the state of the art in the field of breeding supplies for companion terrestrial animals, reptiles, amphibians and fish are addressed by the proposed construction of a mobile animal housing module according to the present invention as set out in the appended claims.

For the purposes of this present invention, the term "mobile animal housing module" is to be understood to mean metal or plastic miscellaneous pens, kennels, cages and similar boxes with solid and/or meshed walls for terrestrial companion animals such as dogs, cats and the like. Furthermore, the term "'mobile animal housing module" is to be understood to include any kind of fully or partially glass terrarium and similar mobile modules for lizards, reptiles, turtles, spiders, insects and similar animals, and also any kind of fully or partially glass aquarium for fishes. Likewise, the term "mobile animal housing module" is to be understood to include any kind of transport vehicle body adapted for the transport and conveyance of animals such as racehorses, racing dogs and similar animals. Finally, "mobile animal housing module" means (stabling) of horses is also considered in this case to be a stable.

For the purposes of the present invention, the term "mobile animal housing module" is to be understood to mean an animal housing module designed for the purpose of transporting, carriage and is therefore provided with transport means such as wheels and/or handles. Secondarily, however, the use of a mobile animal housing module also for the purpose of permanent indoor and possibly outdoor housing is not excluded.

The essence of the present invention consists in the fact that in the mobile animal housing module itself, which is formed by a skeleton, a slide-in modular board is removably placed in this skeleton for mounting electronic components, the basic of which is a temperature sensor, of course in synergy with a battery power source and an electronic display with indicators of values with possible remote and touch control. Preferably, an autonomous control unit and a communication unit preferably also with GPS may also be present. The modularity of the slide-in modular board with selected electronic components according to the user's requirements lies in the fact that it is removable in order to replace it with another slide-in modular board with other electronic components, as a result of which it is possible to completely change the functions of the mobile module according to the actual need. Thus, for example, a slide-in modular board with an electronic component, which is preferably a temperature sensor, is inserted in the mobile module for housing a dog for the purpose of transporting it by car, for example for walking, which is sufficient for the driver transporting the dog to have control over the temperature in the mobile module. Replacement with another slide-in modular board with other electronic components is suitable, for example, in a situation where the dog is hospitalized in a veterinary clinic. For example, the dog owner or clinic staff will move a slide-in modular board with a temperature sensor out of the mobile module and insert another slide-in modular board with other electronic components designed for remote visual and audio monitoring of the dog and for monitoring indicators of the dog's physiological state into the mobile module. In this way, it is not only possible to adapt the functions of a particular mobile module to the actual needs, but also to reduce the overall costs, since it is not necessary to use specialized modules for the given needs, but only to replace the slide-in modular boards. Also important is the fact that changing the function of the mobile module can be done without the need to move the animal from the mobile module elsewhere, or to let it out of the mobile module, simply by changing the slide-in modular board, which can be advantageous, for example, if the animal is anaesthetised or if it is an animal that is difficult to handle or may be dangerous to its surroundings.

Another aspect of the modularity of the slide-in modular electronic component board is based on the fact that it may advantageously have a set of busses and/or connector sockets for inserting or replacing or complementing particular types of electronic components, which are preferably sensors, actuators, power supplies, and so on according to the standard equipment or according to the requirements of the owner. In this case, one slide-in modular board with an available set of electronic components is sufficient for the owner.

The modular board with the contained electronic components is conveniently connected to the mobile module skeleton via an electric connector. A second connector part in the mobile module skeleton is then advantageously connected to the power supply or to the power grid by means of a cable and a plug, and is used for supplying power and recharging the battery. In such an advantageous arrangement, there is no need to address the power supply to the board by a separate power supply, which simplifies its handling and at the same time allows minimize its size, since it does not need to contain the power supply itself. At the same time, handling is safer.

The slide-in modular board can advantageously be located under the ceiling of the skeleton or in the bottom of the skeleton, but implementations where the modular board is located in the wall of the skeleton are not excluded. The arrangement of the slide-in modular board under the ceiling of the skeleton allows for easy handling of the animal, while at the same time making use of an arrangement with a bottom arranged as a handling bed. The skeleton of the mobile module is made of plastic, glass or metal, and the walls may be solid opaque or slatted, which is suitable for a module for housing terrestrial domestic animals such as dogs. Preferably, the material of the skeleton is selected to be resistant to mechanical damage by the housed animal and/or resistant to chemicals to which it will be exposed during cleaning. If the module is intended for housing terrarium animals such as reptiles, then the skeleton is designed to have full transparent walls, e.g. made of glass, whereby a slide-in modular board with electronic components is preferably applied under the ceiling of this mobile module. Alternatively, at the bottom or preferably also at the bottom of the mobile module, a slide-in modular board is then advantageously applied with other electronic components, for example if another slide-in modular board is already applied under the ceiling of this mobile module. At least some of the walls and possibly the bottom and ceiling of the skeleton may be provided with a layer of sound insulation.

The bottom of the mobile animal housing module may preferably be arranged such that the lower part of the skeleton comprises the extensible bottom which may be arranged as a retaining tank for biological material or may be arranged as a handling bed with extending means, such as wheels, which may be included in the medical equipment of the module. It is then preferable, in this case, if the mobile module skeleton comprises additional medical equipment such as: infusion holders and additional medication dispensers. If the extensible bottom of the mobile animal housing module is preferably arranged as a handling tank with extending means, such as wheels, then the accessory is preferably also a height-adjustable, preferably mobile, storage table for the handling tank. With the use of this handling tank, it is then possible to move the animal between the mobile modules or, for example, preferably from the operating room after the procedure directly to the mobile module, just by sliding the handling bed in or out of the skeleton.

The front wall of the skeleton or the face of the skeleton of the mobile module functioning as a door, may preferably be made of a solid transparent material or may preferably be made as a grid. The front wall of the skeleton or the front face of the skeleton of the mobile module may preferably also have a reduced aperture to achieve adequate air access and comfort for the animal. If the front wall of the skeleton is preferably realised as a door, it is preferably specifically designed such that part or all of the front wall of the skeleton is hinged and retractable into the skeleton in the ceiling area, or in the bottom area, or alternatively into the side wall of the skeleton. In this way, the comfort of the animal can be adjusted as required and the safe storage of the door can be ensured. The front wall of the skeleton, or the front of the skeleton of the mobile module, may also preferably be realised in such a way that it is removable from the skeleton in its entirety, preferably after releasing, for example, the swivel hooks or analogous means. In order to make the handling of the mobile module trouble-free, the skeleton of the mobile module preferably comprises transport means for housing the animals, which are for example wheels and/or handles. Preferably, the mobile module may also be provided with feet to ensure air circulation under the mobile or easy cleaning of the space under the module or among the modules.

Attention should also be paid to the solution of the slide-in modular board with electronic components, which is formed by a flat body in which at least one sensor component from the following group is arranged: animal or air temperature sensor, heart rate sensor, blood pressure sensor, blood sugar level sensor, ECG, air temperature sensor, pH sensor, camera with night mode, infrared chip, microphone for monitoring sound symptoms, sensor for monitoring of a filling the tank with biological material, altimeter. Which sensors are used depends on the type of mobile module, whether it will be, for example, a cage or similar structure for terrestrial pets such as dogs, cats and similar animals, or whether it will be for terrariums, aquariums, or whether it will be for transport vehicles adapted for the transport and conveyance of animals such as racehorses, racing dogs and similar animals. Further, the flat body contains at least one electronic component of the group: lighting of the interior of the mobile module, controllable heating element, controllable fan, replaceable antibacterial HEPA filter, humidifier, which again depends on the type of mobile module (for terrestrial animals, terrarium animals, fishes). Further, the slide-in modular board comprises at least one electronic component as a actuating/controlling element from the group: an electronic display with value indicators for remote and touch control, adjustable timers for medicament dosing, a battery power supply and a communication unit with GPS.

The mobile animal housing modules can be modularly arranged in vertical and horizontal assemblies according to the specific use, preferably using butterfly-shaped tie rods for perfect horizontal and vertical fixation, or other adequate fasteners commonly used in the state of the art.

The advantages of the mobile animal housing module according to the present invention are evident from the effects which it externally shows. The effects and originality of the present design consist in the incorporation of a slide-in modular board with electronic components into the skeleton of the mobile animal housing module. The lide-in modular board with electronic components in its volume and on its surface integrates all electronic components as far as possible, which are thus concentrated in one place in the slide-in modular board, thus completely eliminating their distribution in the module skeleton. The slide-in modular board with electronic components, which is part of the mobile animal housing modules, allows for direct visual as well as remote monitoring of the animal. Visual monitoring is an effective permanent visual access to the housed animal in two alternatives of use. If the module door is transparent, this arrangement is suitable for transport during quarantine, complete isolation, etc. The transparent door is then advantageously positioned both foldable and retractable in the upper hollow part of the ceiling, with openings for air supply for the housed animal with a cut-out for controlling the display. If for increased comfort the door preferably comprises a lattice element, then this is suitable to temporarily prevent movement of the animal, for example at the time of a visit, in the case of isolation after a medical procedure. The lattice element may comprise two parts for partial or complete closure of the module, and is preferably located in the lower cavity of the floor of the module in a passive state.

Remote monitoring is a constant overview of the animal's health, comfort and handling conditions using visual, audio and data information during transport, care with a person in charge, etc., as well as the animal's location using a GPS map. Remote monitoring is enabled by components that are housed in a slide-in modular board with electronic components: Animal or air/water temperature sensor, heart rate sensor, blood pressure sensor, blood sugar sensor, ECG, air temperature sensor, pH sensor, camera with night mode, infrared chip, microphone for monitoring sounds, sensor for monitoring the filling the retaining tank with biological material, altimeter, illumination of the inside of the mobile module, controllable heating element, controllable fan, replaceable antibacterial HEPA filter, humidifier, electronic display with indicators for remote and touch control, adjustable timers for medication dosing, battery power supply and communication unit with GPS. What electronic components will be used depends on the type of mobile module, whether it will be a cage or similar construction for terrestrial pets such as dogs, cats and similar animals, or whether it will be for terrariums, aquariums.

Remote monitoring allows the transmission of data via communication means, preferably via mobile applications, to the central consoles of the practitioners without the need to disturb the animal. Furthermore, it allows constant observation of the animal's condition during hospitalization, or during convalescence, absence from home, pregnancy, transport, etc. This creates less separation and psychological comfort. Remote monitoring makes it possible to influence the animal's housing conditions such as heat, ventilation, light. Remote monitoring allows control and adherence to a protocol when an animal is entrusted to an insurance company for insurance, transport, custody, care with the possibility of keeping a record.

Another advantage is the sound insulation applied to the mobile modules, which provides shelter and acoustic comfort for the animal. The acoustic-proof space protects the animal from stress and social noise. This hitherto unconsidered parameter adds a high degree of comfort and convenience for the housed animal. The acoustic insulation of the mobile module wall filling reduces harmful sounds several times. The animal does not seek alternative shelter space, thus contributing to the animal's psychological and mental comfort. The acoustic comfort helps the animal's recovery. In times of increased acoustic discomfort, it prevents escape or attacks or the performance of biological needs, etc. It fully replaces an ineffective and dangerous alternative to dampen animal sensations during periods of increased noise, as various sedative-based dampeners are ineffective and cause interactions without the desired results.

The original construction system ensures both the mutual fixing of the panels and at the same time the fixing of the panels on the rails themselves. Without mechanical damage, the system cannot be disassembled at any point. It is a simple and clean modular construction solution that allows modular assemblies to be assembled with ease, thus making efficient use of space to locate a larger number of modules even of different sizes, using butterfly-shaped tie rods for perfect horizontal and vertical fixing, especially for veterinary needs, transport, business trips, etc. Also terrarium and aquarium mobile modules are fully compatible with terrestrial mobile modules.

### Detailed Description of the Figures

A mobile animal housing module according to the present invention is illustrated in the drawings, wherein Fig. 1 shows the construction of a mobile terrestrial animal housing module with a slide-in modular board for housing electronic components. Fig. 2 shows the construction of the mobile module with the extended pluggable modular board with electronic components. Figure 3 shows the construction of a mobile module with a extensible bottom. Fig. 4 shows the construction of a mobile module whose skeleton includes a layer of sound insulation. Figure 5 shows the design of a mobile module whose door is the entire front wall of the skeleton and is retractable into the skeleton above a slide-in modular board with electronic components below the skeleton ceiling. Figure 6 shows a design of a mobile module whose front wall of the skeleton comprises a reduced aperture. Fig. 7 shows the construction of a mobile module whose door is the entire front wall of the skeleton and still comprises a reduced through-hole. Figure 8 shows the construction of a mobile module, the door of which is the entire front wall of the skeleton and is removable. Fig. 9 shows, in a front view, slide-in modular board for housing electronic components. Figure 10 shows a slide-in modular board for mounting electronic components in top and rear views. Figure 11 shows a slide-in modular board for the fitting of electronic components. Figure 12 shows a storage table as an accessory. Fig. 13 shows a extensible bottom as a handling bed with extending means. Fig. 14 shows the construction of a mobile module - terrarium for amphibious animals with a inserted slide-in modular board with electronic components in the upper part of the skeleton. Figure 15 shows the construction of a mobile module - a terrarium for amphibious animals with a slide-in modular board with electronic components in the lower part of the skeleton. Figure 16 shows the construction of a mobile module - fish aquarium with a slide-in modular board with electronic components at the lower part of the skeleton. Figure 17 shows the construction of a mobile module - aquarium for fishes with a inserted modular board with electronic components in the upper part of the skeleton.

### Examples of embodiments

It is understood that the various embodiments of the present invention are presented for purposes of illustration and not as limitations. Those skilled in the prior art will find or be able to discover, using no more than routine experimentation, many equivalents to specific embodiments of the present invention. Such equivalents will also fall within the scope of the claims.

For those skilled in the state of the art, it cannot be a problem of optimal design so these features have not been addressed in detail.

### Example 1

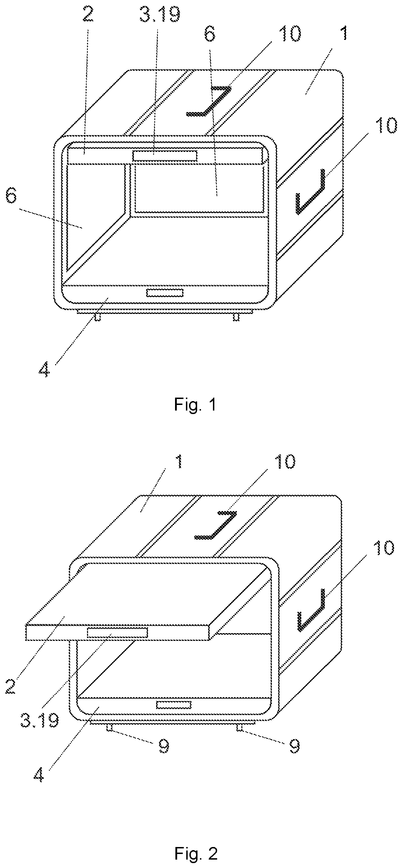

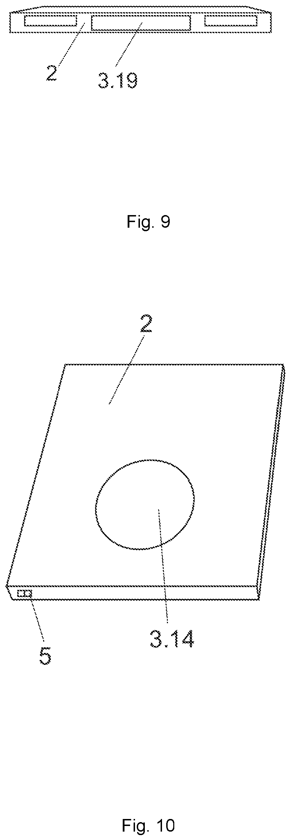

In this example of a particular embodiment of the subject invention, the simplest construction of a mobile module - a pen for housing a dog when transported for remote transportation by automobile, for example, to a family trip location, as shown in Figs. 1 and 2, is described. The mobile module for housing a dog comprises a skeleton 1 in which a slide-in 2. modular board 2 with electronic components is located. The slide-in modular board 2 is connected to the module skeleton 1 via a connector 5, which is shown in Fig. 10. The other part of the connector 5 in the mobile module skeleton 1 is connected to a power source or to the electricity grid by means of a cable and a plug, which is not shown in any of the figures. Such an arrangement of the slide-in modular board 2 connected via the connector 5 to the skeleton 1 is advantageously also used in the other examples of embodiments described below.

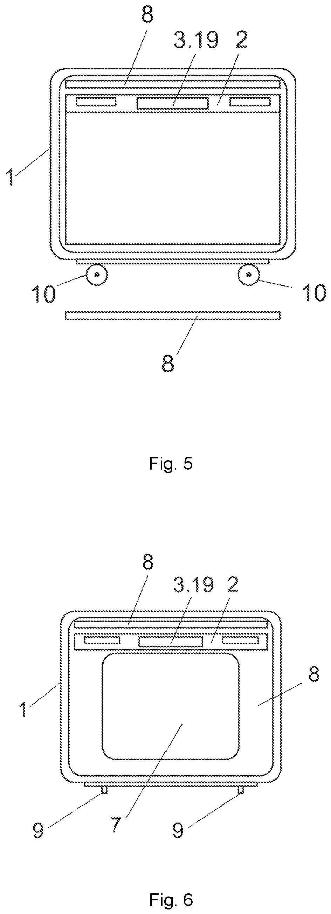

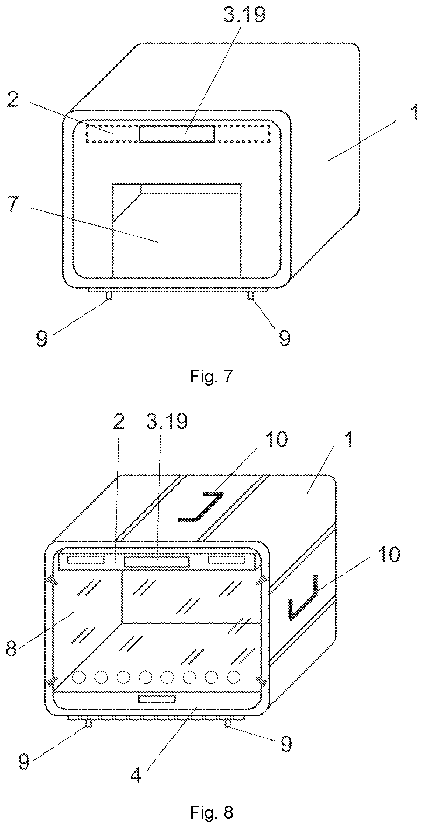

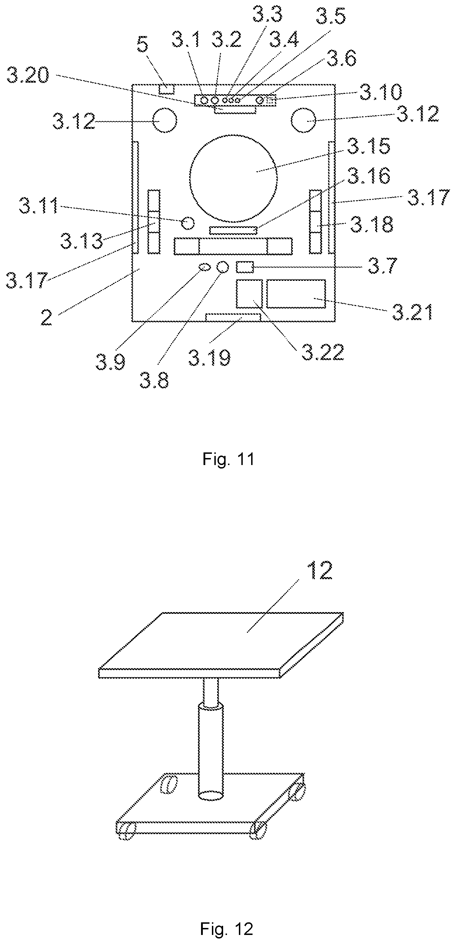

The slide-in modular board 2 is located under the ceiling of the skeleton 1. The skeleton 1 of the mobile module is made of plastic, its walls being solid and opaque. The front wall of the skeleton 1 of the cereal module, functioning as a door 8, is made transparent, as shown in Figure 8, or alternatively it is made as a grid and is hinged and retractable into the skeleton 1 of the mobile module in the ceiling area, as shown in Figure 5. The skeleton 1 of the mobile animal housing module comprises additional utility equipment in the form of transport means 10, which are handles, which are shown in Figs. 1, 2 and 8, and wheels, which are shown in Fig. 5. The lower part of the skeleton 1 of the mobile module comprises a extensible bottom 4, which in this case acts as a retaining tank for a biological material The electronic components of the slide-in modular board 2 are an air temperature sensor 3.1, an electronic display 3.19 with indicators for remote and touch control values. The battery power supply 3.21, the communication unit 3.22 with GPS and the control unit 3.18 are not shown in Figs. 1 and 2 but are evident from Fig. 11.

### Example 2

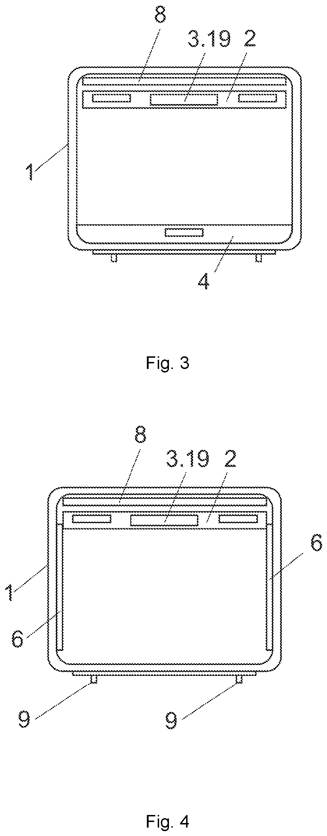

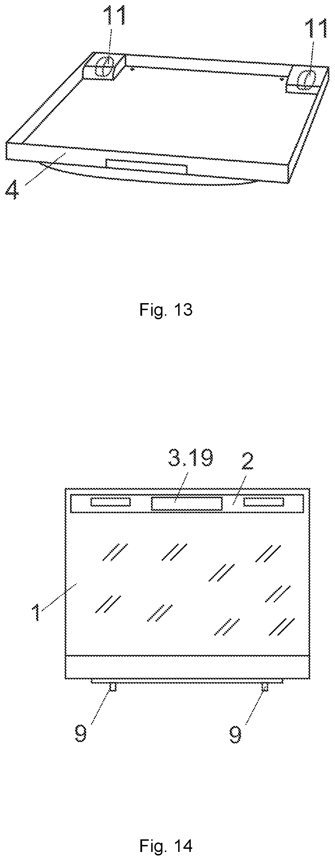

In this example of a specific embodiment of the subject invention, the construction of a mobile module - a pen for housing a dog for the purpose of hospitalization in a veterinary clinic is described, as shown in Fig. 3. It is a modular solution based on the exchange of individual components of the mobile module. The skeleton 1 of the mobile module described in Example 1 is used, with minor modifications, where the lower part of the skeleton 1 of the mobile module with the extensible bottom 4, which is the retaining tank for a biological material is exchanged for the extensible bottom 4, which is functioning as a medical handling tank with the extending means 11, which are the wheels as shown in Fig. 13. Then the accessory is also a height-adjustable storage table 12 for the medical handling tank as shown in Fig. 12. The skeleton 1 of the mobile module is further supplemented with additional medical equipment such as: infusion holders and additional medication dispensers, which is not shown in the figures. The modification also relates to the replacement of the slide-in modular board 2 described in Example 1 with another slide-in modular board 2 with a wider fitting of electronic components, as shown in Fig. 11, such as: the sensor 3.1 air temperature, sensor 3.11 animal temperature, sensor 3.2 heart rate, sensor 3.3 blood pressure, sensor 3.4 sugar level, ECG 3.5, camera 3.6 with day/night mode, infrared chip 3.7, microphone 3.8 for audio monitoring, sensor 3.9 for monitoring of filling the retaining tank, lighting 3.12 inside the module, controllable heating element 3.13, controllable fan 3.14, replaceable antibacterial HEPA filter 3.15, humidifier 3.16 air, electrically controlled pneumatic/hydraulic inputs and/or outputs 3.17, electronic display 3.19 with remote and touch control indicators, adjustable timers 3.20, rechargeable power supply 3.21 and communication unit 3.22 with GPS.

Alternatively, the module pen for housing a dog during hospitalization in a veterinary clinic is provided with a layer of sound insulation 6, which is preferably inserted in the form of plates into the skeleton 1 as shown in Figs. 1 and 4.

In another alternative solution, the slide-in modular board 2 is located in the bottom or wall of the skeleton 1 which is not shown in the figures.

In another alternative embodiment, the front wall of the skeleton 1 comprises a reduced aperture 7 as shown in Figs. 6 and 7.

Alternatively, the alternative solution is one where the individual components of the mobile module are not replaced at the consumer's site, but a new mobile module is completely manufactured at the factory with the above components and design and which the consumer can purchase or rent. Such mobile modules would only be used, for example, in veterinary clinics.

Finally, a further alternative solution for the mobile animal housing module is one where the slide-in modular board 2 comprises a set of busses and/or connector sockets for inserting or replacing or adding different types of electronic components according to the standard equipment or according to the owner's requirements.

### Example 3

In this example of a particular embodiment of the subject invention, the construction of a module - a pen for housing a cat during air transport to a holiday destination is described, which is illustrated in Fig. 8. The cat placement module comprises a skeleton 1 in which a slide-in modular board 2 with electronic components 3 is housed. The slide-in modular board 2 is connected to the skeleton 1 of the module by the means of a connector 5. The slide-in modular board 2 is positioned under the ceiling of the skeleton 1. The module skeleton 1 is made of plastic or metal, its walls being solid and opaque. The front wall of the skeleton 1 of the module, functioning as a door, is made solid and transparent, being hinged and retractable into the skeleton 1 of the module in the ceiling area. The skeleton 1 of the animal housing module 1 comprises transport means 10, which are handles, and also has feet 9. The lower part of the skeleton 1 of the module 2 comprises a extensible bottom 4, which is a retaining tank for a biological material. The module would be equipped with a layer of sound insulation 6, which in the form of plates would be inserted into the skeleton 1. The electronic components of the slide-in modular board 2 are an air temperature sensor 3.1, a camera 3.6 with a day/night mode, an infrared chip 3.7, a microphone 3.8 for monitoring sound, a sensor 3.9 for monitoring of the filling the retaining tank, a lighting 3.12 of the module interior, and a controllable heating element 3.13, controllable fan 3.14, replaceable antibacterial HEPA filter 3.15, humidifier 3.16, electrically controlled pneumatic/hydraulic inputs and/or outputs 3.17, electronic display 3.19 with remote and touch-controlled indicators of values, autonomous control unit 3.18, altimeter 3.10, a battery power supply 3.21 and switchable communication unit 3.22 with GPS.

### Example 4

In this example of a particular embodiment of the subject invention, the construction of a mobile module - terrarium for housing lizards as shown in Fig. 14, is described. The skeleton 1 comprises full transparent glass walls, while under the ceiling of this mobile module is applied a slide-in modular board 2 with electronic components such as: air temperature sensor 3.1, humidity sensor not shown in the pictures, camera 3.6 with day/night mode, infrared chip 3.7, lighting 3. 12 interior of the mobile module, controllable heating element 3.13, controllable fan 3.14, replaceable antibacterial HEPA filter 3.15, humidifier 3.16 air, electronic display 3.19 with remote and touch control indicators, adjustable timers 3.20, a battery power supply 3.21, and communication unit 3.22 with GPS.

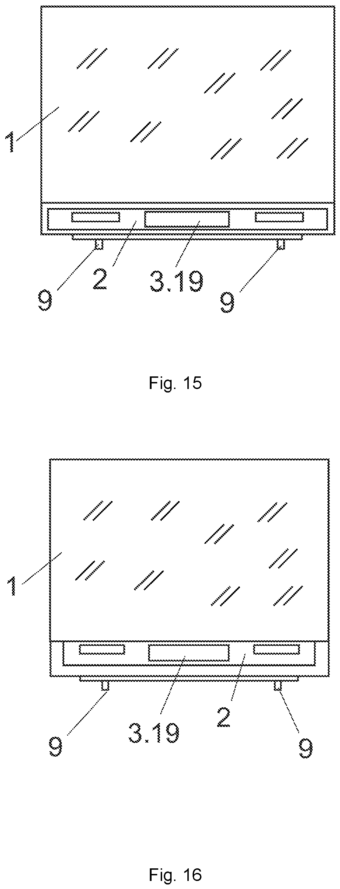

In an alternative solution, a slide-in modular board 2 with other electronic components is applied to the bottom of the mobile module such as pneumatic/hydraulic inputs and/or outputs 3.17 for a water pump and a water or pH filter, a heating system not shown in the figures, an electronic display 3.19 with indicators for remote and touch control, adjustable timers 3.20, a battery power supply 3.21 and a communication unit 3.22 with GPS, as shown in FIG. 15.

### Example 5

In this example of a specific embodiment of the subject invention, the construction of a mobile module-aquarium for housing the fishes, as shown in FIG. 16, is described. The skeleton 1 comprises full transparent walls made of glass, while a slide-in modular board 2 with electronic components is applied to the bottom of this mobile module such as: a water temperature sensor 3.1, lighting 3.12 of the interior of the mobile module, a controllable heating element 3.13, pneumatic/hydraulic inputs and/or outputs 3.17 for the water pump, aerator and water or pH filter, an electronic display 3.19 with remote and touch control value indicators, adjustable timers 3.20 for lighting, feed dosing, aerator, battery power supply 3.21 and communication unit 3.22, which are shown in FIG. 11.

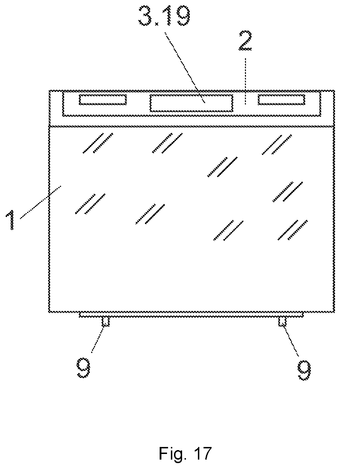

Alternatively, Fig. 17 shows the application of a slide-in modular board 2 with electronic components on top of the skeleton 1 of the mobile module-aquarium. Electronic components such as: water temperature sensor 3.1, lighting 3.12 of the interior of the mobile module, controllable heating element 3.13, pneumatic/hydraulic inputs and/or outputs 3.17 for water pump, aerator and water or pH filter, electronic display 3.19 with value indicators for remote and touch control, adjustable timers 3.20 for lighting, feed metering, aerator, battery power supply 3.21 and communication unit 3.22, all of which are shown in Fig. 11.

### Industrial applicability

The mobile animal housing modules according to the present invention are intended for the field of animal breeding for companion terrestrial animals, amphibians and fishes.

### Reference signs:

- 1: skeleton
- 2: slide-in modular board
- 3.1: temperature sensor
- 3.2: heart rate sensor
- 3.3: blood pressure sensor
- 3.4: sugar level sensor
- 3.5: ECG
- 3.6: camera with day/night mode
- 3.7: infrared chip
- 3.8: microphone
- 3.9: sensor for monitoring of filling the retaining tank
- 3.10: altimeter
- 3.11: blood pressure sensor
- 3.12: lighting
- 3.13: controllable heating element
- 3.14: controllable fan
- 3.15: HEPA filter
- 3.16: air humidifier
- 3.17: electrically controlled pneumatic/hydraulic inputs and/or outputs
- 3.18: autonomous control unit
- 3.19: electronic display
- 3.20: timers
- 3.21: electricity source
- 3.22: communication unit
- 4: extensible bottom
- 5: connector
- 6: sound insulation
- 7: aperture
- 8: doors
- 9: feet
- 10: transport means
- 11: extending means
- 12: adjustable table

## Claims

1. A mobile animal housing module formed by a skeleton (1), wherein a board (2) for mounting electronic components (3.1 to 3.22) is removably arranged in the skeleton (1), wherein there is at least one electronic component selected from the group consisting of: a heart rate sensor (3.2), a blood pressure sensor (3.3),
a blood sugar sensor (3.4), an ECG sensor (3.5), a camera (3.6) with a day/night mode, an infrared chip (3.7), a microphone (3.8) for monitoring sounds, a sensor (3.9) for monitoring the filling of a retaining tank, a altimeter (3.10), an autonomous control unit (3.18), arranged in the modular board (2), **characterized in that**
the modular board (2) is a slide-in modular board (2) connected to the skeleton (1) by the means of an electric connector (5).

2. The mobile animal housing module according to claim 1, **characterized in that** a temperature sensor (3.1) is arranged in the slide-in modular board (2).

3. The mobile animal housing module according to any one of the previous claims, **characterized in that** the lower part of the skeleton (1) comprises an extensible bottom (4).

4. The mobile animal housing module according to any one of the previous claims, **characterized in that** there is at least one electronic component selected from the group consisting of: lighting (3.12) of the interior of the mobile module, a controllable heating element (3.13), a controllable fan (3.14), a replaceable antibacterial HEPA filter (3.15), a humidifier (3.16) of the air, electrically controlled pneumatic/hydraulic inputs and/or outputs (3.17), arranged in the slide-in modular board (2).

5. The mobile animal housing module according to any one of the previous claims, **characterized in that** there is at least one electronic component selected from the group consisting of: an electronic display (3.19) with remote and touch-controlled value indicators, adjustable timers (3.20), a battery power supply (3.21) and a communication unit (3.22), arranged in the slide-in modular board (2).

6. The mobile animal housing module according to any one of the previous claims, **characterized in that** the skeleton (1) comprises a layer of sound insulation (6).

7. The mobile animal housing module according to any one of the previous claims, **characterized in that** the front wall of the skeleton (1) comprises a reduced aperture (7).

8. The mobile animal housing module according to any one of the preceding claims, **characterized in that** it comprises a door (8) which constitutes part or all of front wall of the skeleton (1) and is foldable and retractable into the skeleton (1).

9. The mobile animal housing module according to any one of the previous claims, **characterized in that** the skeleton (1) comprises additional medical equipment such as: infusion holders, additional medication dispensers.

10. The mobile animal housing module according to any one of the previous claims, **characterized in that** the skeleton (1) comprises feet (9).

11. The mobile animal housing module according to any one of the previous claims, **characterized in that** the slide-in modular board (2) is arranged under the ceiling of the skeleton (1).

## Patentansprüche

1. Ein mobiles Modul zur Unterbringung von Tieren, bestehend aus einem Skelett (1), wo im Skelett (1) eine modulare Platte (2) zur Montage elektronischer Komponenten (3.1 bis 3.22) abnehmbar angeordnet ist, wobei in der modularen Platte (2) mindestens eine elektronische Komponente angeordnet ist ausgewählt aus einer Gruppe bestehend aus: einem Herzschlagsensor (3.2), einem Blutdrucksensor (3.3), einem Blutzuckersensor (3.4), einem EKG-Sensor (3.5), einer Kamera (3.6) mit dem Tag/Nacht-Regime, einem Infrarot-Chip (3.7), einem Mikrofon (3.8) zur Tonüberwachung, einem Sensor (3.9) zur Überwachung des Füllens des Auffangbehälters, einem Höhenmesser (3.10), einer autonomen Steuereinheit (3.18), **dadurch gekennzeichnet, dass** die modulare Platte (2) eine einschiebbare modulare Platte (2) ist, ans Skelett (1) mithilfe von den Mitteln des elektrischen Verbindungssteckers (5) angeschlossen.

2. Ein mobiles Modul zur Unterbringung von Tieren nach Anspruch 1, **dadurch gekennzeichnet, dass** in der einschiebbaren modularen Platte (2) ein Temperatursensor (3.1) angeordnet ist.

3. Ein mobiles Modul zur Unterbringung von Tieren nach einem der vorstehenden Ansprüche, **dadurch gekennzeichnet, dass** der untere Teil des Skeletts (1) einen ausziehbaren Boden (4) aufweist.

4. Ein mobiles Modul zur Unterbringung von Tieren nach einem der vorstehenden Ansprüche, **dadurch gekennzeichnet, dass** in der modularen Platte (2) mindestens eine elektronische Komponente angeordnet ist, ausgewählt aus der Gruppe bestehend aus: einer Beleuchtung (3.12) des Innenraums des mobilen Moduls, einem regulierbaren Heizkörper (3.13), einem kontrollierbaren Lüfter (3.14), einem austauschbaren antibakteriellen HEPA-Filter (3.15), einem Luftbefeuchter (3.16), elektrisch gesteuerten pneumatischen/hydraulischen Einund/oder Ausgängen (3.17).

5. Ein mobiles Modul zur Unterbringung von Tieren nach einem der vorstehenden Ansprüche, **dadurch gekennzeichnet, dass** in der modularen Platte (2) mindestens eine elektronische Komponente angeordnet ist, ausgewählt aus der Gruppe bestehend aus: einem elektronischen Display (3.19) mit ferngesteuerten und berührungsgesteuerten Wertanzeigern, einstellbaren Zeitschaltuhren (3.20), einer Batteriequelle (3.21) und einer Kommunikationseinheit (3.22).

6. Ein mobiles Modul zur Unterbringung von Tieren nach einem der vorstehenden Ansprüche, **dadurch gekennzeichnet, dass** das Skelett (1) eine Schalldämmungsschicht (6) aufweist.

7. Ein mobiles Modul zur Unterbringung von Tieren nach einem der vorstehenden Ansprüche, **dadurch gekennzeichnet, dass** die Vorderwand des Skeletts (1) eine verkleinerte Öffnung (7) aufweist.

8. Ein mobiles Modul zur Unterbringung von Tieren nach einem der vorstehenden Ansprüche, **dadurch gekennzeichnet, dass** es eine Tür (8) aufweist, durch die die gesamte Vorderwand des Skeletts (1) oder einen Teil davon gebildet wird und die in das Skelett (1) faltbar und einschiebbar ist.

9. Ein mobiles Modul zur Unterbringung von Tieren nach einem der vorstehenden Ansprüche, **dadurch gekennzeichnet, dass** das Skelett (1) eine zusätzliche ärztliche Ausstattung aufweist wie: Infusionshalter, zusätzliche Medikamentendosiergeräte.

10. Ein mobiles Modul zur Unterbringung von Tieren nach einem der vorstehenden Ansprüche, **dadurch gekennzeichnet, dass** das Skelett (1) Füße (9) aufweist.

11. Ein mobiles Modul zur Unterbringung von Tieren nach einem der vorstehenden Ansprüche, **dadurch gekennzeichnet, dass** die einschiebbare modulare Platte (2) unterhalb der Decke des Skeletts (1) angeordnet ist.

## Revendications

1. Le module mobile pour animaux formé de l'ossature (1) dans laquelle se trouve une carte modulaire enfichable (2) pour faire monter des composants électroniques (3.1 à 3.22) étant donné que dans la carte modulaire (2), au moins un composant électronique est disposé, ce composant étant pris du groupe constitué des: capteur (3.2) de fréquence cardiaque, capteur (3.3) de pression artérielle, capteur (3.4) de glycémie, capteur (3.5) ECG, caméras (3.6) avec mode jour/nuit, puce infrarouge (3.7), microphone (3.8) de surveillance sonore, capteur (3.9) de surveillance du remplissage du réservoir de rétention, altimètre (3.10), unité de contrôle autonome (3.18), **caractérisé en ce que** la carte modulaire (2) est carte modulaire enfichable (2) reliée à l'ossature (1) par moyens du connecteur électrique (5).

2. Le module mobile pour animaux selon la revendication 1, **caractérisé en ce que** dans la carte modulaire enfichable (2), un capteur de température (3.1) est disposé.

3. Le module mobile pour animaux selon quelconque des revendications précédentes, **caractérisé en ce que** la partie inférieure de l'ossature (1) contient un fond escamotable (4).

4. Le module mobile pour animaux selon quelconque des revendications précédentes, **caractérisé en ce que** dans la carte modulaire enfichable (2), au moins un composant électronique pris du groupe constitué des : éclairage (3.12) de l'espace intérieur du module mobile, élément chauffant réglable (3.13), ventilateur à commande (3.14), filtre HEPA antibactérien remplaçable (3.15), humidificateur (3.16) d'air, entrées et/ou sorties pneumatiques/hydrauliques à commande électrique (3.17).

5. Le module mobile pour animaux selon quelconque des revendications précédentes, **caractérisé en ce que** dans la carte modulaire enfichable (2), au moins un composant électronique pris du groupe constitué des : affichage numérique (3.19) avec indicateurs de valeur télécommandés et tactiles, minuteries réglables (3.20), source de batterie (3.21) et unité de communication (3.22).

6. Le module mobile pour animaux selon quelconque des revendications précédentes, **caractérisé en ce que** l'ossature (1) contient une couche d'isolation acoustique (6).

7. Le module mobile pour animaux selon quelconque des revendications précédentes, **caractérisé en ce que** la paroi avant de l'ossature (1) contient une ouverture réduite (7).

8. Le module mobile pour animaux selon quelconque des revendications précédentes, **caractérisé en ce qu'**il contient une porte (8) qui forme une partie ou la totalité de la paroi avant de l'ossature (1) et qui est pliable et enfichable à l'ossature (1).

9. Le module mobile pour animaux selon quelconque des revendications précédentes, **caractérisé en ce que** l'ossature (1) contient des équipements médicaux supplémentaires, tels que: des supports de perfusion, des distributeurs de médicaments supplémentaires.

10. Le module mobile pour animaux selon quelconque des revendications précédentes, **caractérisé en ce que** l'ossature (1) contient des pieds (9).

11. Le module mobile pour animaux selon quelconque des revendications précédentes, **caractérisé en ce que** la carte modulaire enfichable (2) est disposé sous le plafond de l'ossature (1).
